# EUROPÄISCHE PATENTSCHRIFT

(11) **EP 3 129 206 B1**
(45) Veröffentlichungstag und Bekanntmachung des Hinweises auf die Patenterteilung: **12.02.2020**
(21) Anmeldenummer: 15715167.1
(22) Anmeldetag: 09.04.2015
(51) Int. Cl.: B29C 49/42, B65G 47/86, B29C 49/06, B29C 49/36, B65G 29/00, B29K 667/00, B29L 31/00

(54) **VORRICHTUNG UND VERFAHREN ZUM TRANSPORTIEREN UND HANDHABEN VON BEHÄLTERN**
DEVICE AND METHOD FOR TRANSPORTING AND HANDLING CONTAINERS
DISPOSITIF ET PROCÉDÉ POUR TRANSPORTER ET MANIPULER DES RÉCIPIENTS

(30) Priorität: 10.04.2014 DE 102014005321
(43) Veröffentlichungstag der Anmeldung: 15.02.2017
(73) Patentinhaber: KHS Corpoplast GmbH, 22145 Hamburg (DE)
(72) Erfinder: GERHARDS, Martin, 22089 Hamburg (DE); HERKLOTZ, Thorsten, 22926 Ahrensburg (DE); KLATT, Dieter, 22147 Hamburg (DE)
(74) Vertreter: Hausfeld, Norbert
(86) Internationale Anmeldenummer: PCT/EP2015/000752
(87) Internationale Veröffentlichungsnummer: WO 2015/154880

(56) Entgegenhaltungen:
- CH-A5- 678 616
- DE-A1-102006 023 531
- DE-A1-102008 013 380
- DE-A1-102011 101 255
- US-A- 4 824 359
- US-A1- 2011 056 809
- US-A1- 2013 062 163
- US-A1- 2013 243 895

## Beschreibung

Die Erfindung betrifft eine Vorrichtung zum Transportieren und Handhaben von Behältern mit den Merkmalen des Anspruchs 1. Weiterhin betrifft die Erfindung ein Verfahren zum Transportieren und Handhaben von Behältern nach Anspruch 10.

Erfindungsgemäße Vorrichtungen und Verfahren zum Transportieren und Handhaben von Behältern dienen in der Regel dazu, die Behälter von einer Eingabestelle zu einer Ausgabestelle zu transportieren. Dabei weist die entsprechende Transportvorrichtung wenigstens eine Handhabungseinrichtung auf zur insbesondere gleichzeitigen Handhabung eines oder mehrerer Behälter. Die Transportvorrichtung fördert die Behälter in Förderrichtung bzw. in Transportrichtung auf dem Transportweg zwischen der Eingabestelle und der Ausgabestelle. Auf diesem Transportweg kann eine Behandlungsstation für die Behälter vorgesehen sein.

Die hier in Rede stehende Transportvorrichtung bzw. das hier in Rede stehende Verfahren kann für den Transport von Behältern unterschiedlicher Art ausgebildet sein, insbesondere für den Transport von Vorformlingen und daraus hergestellter Behälter. Insbesondere handelt es sich bei den hier in Rede stehenden Transportvorrichtungen und Verfahren um solche, die z.B. in Blasformungsmaschinen zum Einsatz kommen, z.B. um solche rotierender Bauart, in denen also aus Vorformlingen aus einem thermoplastischen Material durch Blasdruckeinwirkung Behälter geblasen werden. Dabei werden bevorzugt Behälter aus einem thermoplastischen Material verwendet, wie insbesondere Vorformlinge aus PET (Polyethylenterephtalat). Diese Vorformlinge werden innerhalb einer Blasformungsmaschine unterschiedlichen Bearbeitungsstationen zugeführt. Typischerweise weist eine derartige Blasformungsmaschine eine Heizeinrichtung sowie eine Blaseinrichtung auf, in deren Bereich der zuvor temperierte Vorformling durch biaxiale Orientierung zu einem Behälter expandiert wird. Die Expansion erfolgt mit Hilfe von Druckluft, die in den zu expandierenden Vorformling eingeleitet wird. Der verfahrenstechnische Ablauf einer derartigen Expansion des Vorformlings wird in der DE 43 40 201 A1 erläutert. Die erwähnte Einleitung des unter Druck stehenden Gases umfasst auch die Druckgaseinleitung in die sich entwickelnde Behälterblase sowie die Druckgaseinleitung in den Vorformling zu Beginn des Blasvorganges.

Der grundsätzliche Aufbau einer Blasstation zur Behälterformung wird in der DE 42 12 583 A1 beschrieben. Möglichkeiten zur Temperierung der Vorformlinge werden in der DE 23 52 926 A1 erläutert. Weitere Transportvorrichtungen und Verfahren sind in den Druckschriften US2011/056809A1, DE102006023531 A1, US4824359A, DE102011101255A1, DE102008013380A1 und CH678616A5 beschrieben.

Innerhalb der Vorrichtung zur Blasformung können die Vorformlinge sowie die geblasenen Behälter mit Hilfe unterschiedlicher Transportvorrichtungen und unterschiedlicher Handhabungseinrichtungen transportiert und gehandhabt werden. Bewährt hat sich insbesondere die Verwendung von Transportdornen, auf die die Vorformlinge aufgesteckt werden. Die Vorformlinge können aber auch mit anderen Trageinrichtungen gehandhabt werden. Die Verwendung von Greifzangen zur Handhabung von Vorformlingen und die Verwendung von Spreizdornen, die zur Halterung in einen Mündungsbereich des Vorformlings einführbar sind, gehört ebenfalls zu den verfügbaren Konstruktionen.

Ein Transport und eine Handhabung von Behältern unter Verwendung von Übergaberädern ist beispielsweise in der DE 199 06 438 A1 bei einer Anordnung des Übergaberades zwischen einem Blasrad und einer Ausgabestrecke beschrieben. Die erfindungsgemäße Transportvorrichtung kann insbesondere so ein Übergaberad sein, das auch an einer anderen Position in der Blasformungsmaschine angeordnet sein kann, z.B. vor der Heizeinrichtung und/oder zwischen Heizeinrichtung und Blaseinrichtung und/oder hinter der Blaseinrichtung.

Die bereits erläuterte Handhabung vor Vorformlingen erfolgt zum einen bei den sogenannten Zweistufenverfahren, bei denen die Vorformlinge zunächst in einem Spritzgussverfahren hergestellt, anschließend zwischengelagert und erst später hinsichtlich ihrer Temperatur konditioniert und zu einem Behälter aufgeblasen werden. Zum anderen erfolgt eine Anwendung bei den sogenannten Einstufenverfahren, bei denen die Vorformlinge unmittelbar nach ihrer spritzgusstechnischen Herstellung und einer ausreichenden Verfestigung geeignet temperiert und anschließend aufgeblasen werden.

Im Hinblick auf die Verwendung von Blasstationen sind unterschiedliche Ausführungsformen bekannt. Bei Blasstationen, die auf rotierenden Transporträdern angeordnet sind, ist häufig eine buchartige Aufklappbarkeit der Formträger anzutreffen. Es ist aber auch möglich, relativ zueinander verschiebbare oder andersartig geführte Formträger einzusetzen. Bei ortsfesten Blasstationen, die insbesondere dafür geeignet sind, mehrere Kavitäten zur Behälterformung aufzunehmen, werden typischerweise parallel zueinander angeordnete Platten als Formträger verwendet.

Für den Transport und die Handhabung der Vorformlinge und zum Transport und zur Handhabung der geblasenen Behälter werden innerhalb der Blasmaschine häufig sogenannte Übergaberäder verwendet, die mit Tragelementen als Handhabungseinrichtungen für die Vorformlinge oder Flaschen ausgestattet sind. Die Tragelemente können entweder direkt auf die Vorformlinge oder Flaschen zugreifen oder separate Transportelemente befördern, die ihrerseits direkt die Vorformlinge oder Flaschen haltern. Zur Unterstützung von Übergabevorgängen sind die Tragelemente typischerweise relativ zum Übergaberad verschwenkbar gelagert. Zusätzlich ist häufig auch eine Teleskopierbarkeit realisiert. Zur Positionsvorgabe für die Tragelemente werden im Stand der Technik in der Regel Kurvensteuerungen verwendet. Die Tragelemente werden hierzu mit sogenannten Kurvenrollen an ortsfest angeordneten Kurven vorbeigeführt. Ähnliche Anordnungen von Tragelementen beziehungsweise von Handhabungseinrichtungen können auch an anderen Bereichen der Blasmaschine vorgesehen sein.

Eine Problem bei der Verwendung von derartigen gegenüber dem Übergaberad oder sonstigen Transporteinrichtungen verschwenkbar gelagerten Tragelementen ist, dass beim Auftreten mechanischer Störungen, insbesondere beim Auftreten von Kollisionen, schwere Schäden auftreten können, die zu vermeiden sind. Eine Verwendung von Überlastkupplungen als bekannte Lösung verteuert und erschwert die sich bewegenden Transportelemente beziehungsweise insbesondere die Übergaberäder unnötig.

Ein weiteres Kernproblem ist bei einer solchen Blasmaschine darin zu sehen, dass eine hohe Genauigkeit bei der Synchronisierung und Synchronhaltung der miteinander in Eingriff stehenden Transportelemente sichergestellt werden muss. Sowohl Überlastkupplungen als auch kleine Abweichungen bei Drehgeschwindigkeiten und ähnlichem führen schnell zu einem asynchronen Lauf der einzelnen beweglichen Teile einschließlich der Transportelemente. Damit kommt es zu Ungenauigkeiten bei der Übergabe der zu transportierenden und zu bearbeitenden Behälter bis hin zu einem zwangsweisen Abschalten der Maschine bei zu großen Abweichungen.

Im Übrigen müssen einzelne, als Module bereitgestellte Teilelemente der Blasmaschine in aufwendiger Weise mit den übrigen Modulen zur Sicherstellung eines synchronen Laufs der Teilelemente verknüpft werden. Dies erfordert erheblichen Installations- und Justageaufwand durch die erforderliche Feinabstimmung der für einen Synchronlauf verantwortlichen Kurven.

Klarstellend sei erwähnt, dass der in den Ansprüchen gewählte Begriff des Behälters sowohl Vorformlinge als auch die daraus hergestellten Behältnisse meint.

Aufgabe der vorliegenden Erfindung ist es, eine Vorrichtung und ein Verfahren der einleitend genannten Art derart zu verbessern, dass bei einem einfachen konstruktiven Aufbau und bei geringem Installationsaufwand eine hohe Betriebssicherheit sichergestellt wird.

Diese Aufgabe wird erfindungsgemäß durch eine Transportvorrichtung mit den Merkmalen des Anspruchs 1 sowie durch ein Verfahren nach Anspruch 10 gelöst.

Demnach weist die Transportvorrichtung wenigstens eine Handhabungseinrichtung auf, die motorisiert ausgeführt ist und motorisch bewegbar beziehungsweise verschwenkbar ist. Diese motorische Bewegbarkeit der Handhabungseinrichtungen ist statt einer Kurvensteuerung vorgesehen. Sie ermöglicht insbesondere eine einfache Anpassung der Bewegungen der einzelnen beweglichen Teile aneinander. Die Handhabungseinrichtungen beziehungsweise Tragarme können demnach auf motorischem Wege miteinander synchron in Eingriff gebracht werden, beispielsweise zur Behälterübergabe oder zur Bearbeitung der Behälter in einer Bearbeitungsstation.

Als weiterer Vorteil ergibt sich, dass die Handhabungseinrichtungen bedarfsweise und einzeln in gewünschte Positionen verfahren werden können. Es ist dadurch z.B. möglich, bei Kollisionsgefahr, bei Notabschaltungen oder bei kontrolliertem Herunter- oder Anfahren einer Maschine die Handhabungseinrichtungen in eine Sicherheitsposition zu verfahren, in der zuverlässig Kollisionsrisiken ausgeschlossen sind. Dies kann über eine Steuerung erfolgen, es sind keine zusätzlichen Steuerkurven vorzusehen. Es können auch einzelne, z.B. nicht mehr ordnungsgemäß arbeitende Handhabungseinrichtungen in eine Position gebracht werden, in denen keine Handhabungsvorgänge mehr ausgeführt werden. Es ist auch denkbar, dass nicht mehr alle Handhabungseinrichtungen benötigt werden, z.B. bei Umstellung auf neue Behältergrößen, so dass z.B. ein Teil der Handhabungseinrichtungen in eine Ruheposition gebracht wird und nicht mehr an Handhabungs- und Übergabevorgängen teilnimmt.

Im Rahmen der Erfindung meint eine Ruheposition insbesondere eine Position oder Positionierung einer Handhabungseinrichtung, in denen diese außer Eingriff gebracht ist oder wird bezüglich sämtlicher sonstiger Maschinenelemente. Für das Beispiel einer als Übergaberad ausgebildeten Transportvorrichtung, bei dem die Handhabungseinrichtung bei bestimmungsgemäßem Einsatz in einem ersten Übergabebereich oder Übergabepunkt einen Behälter aufnimmt und in einem zweiten Übergabebereich oder Übergabepunkt diesen wieder abgibt, ist die Ruheposition insbesondere derart gewählt, dass trotz Drehung des Übergaberades eine Kollision der Handhabungseinrichtung im Bereich der Übergabebereiche/Übergabepunkte mit sämtlichen dort vorhandenen Maschinenteilen und mit gegebenenfalls vorhandenen Behältern sicher ausgeschlossen wird. Wenn die Handhabungseinrichtung ferner beispielsweise einen teleskopierbaren und/oder schwenkbaren Tragarm umfasst, dann ist der Tragarm in der Ruheposition vorzugsweise teleskopisch eingezogen und/oder hin zur Drehachse des Übergaberades verschwenkt.

Aus Sicherheitsgründen ist ebenfalls daran gedacht, die Ruheposition beispielsweise mittels einer geeigneten, insbesondere mechanischen, Rückstellvorrichtung als Vorzugsposition der Handhabungseinrichtung auszubilden, so dass die Handhabungseinrichtung bei Störungen der motorischen Antriebe eigenständig die Ruheposition einnimmt. Geeignete Rückstellvorrichtungen können dabei passiv, beispielsweise mittels geeigneter Rückstellfedern, ausgebildet sein. Es ist im Rahmen der Erfindung jedoch auch daran gedacht, dass eine geeignete Rückstellvorrichtung aktive Stellglieder, wie beispielsweise einen Pneumatikzylinder, aufweist, um die Handhabungseinrichtung bei Auftreten eines Fehlers oder Detektieren eines Fehlerzustandes oder aufgrund eines der Steuerung übermittelten Fehlersignals aktiv in die Ruheposition zu bewegen.

Es wird ebenfalls als Vorteil angesehen, dass erfindungsgemäß jede Handhabungseinrichtung einzeln angesteuert werden kann und unabhängig von anderen Handhabungseinrichtungen. Die Bewegung der Handhabungseinrichtung muss daher nicht zeitlich konstant sein, wie bei den bisher üblichen Kurvensteuerungen, sondern kann sich ändernden Bedingungen angepasst werden, da ein zusätzlicher Freiheitsgrad in der Steuerung der Handhabungseinrichtungen zur Verfügung steht.

Das erfindungsgemäße Verfahren zeichnet sich analog zur geschilderten Vorrichtung dadurch aus, dass die Transportvorrichtung mit wenigstens einem Motor für den Antrieb der Handhabungsmittel ausgestattet wird, wobei die Handhabungsmittel vom Motor antreibbar mit diesem verbunden werden, dass sie motorisch in der von der Transportrichtung abweichenden Richtung bewegbar ist. Die Begriffe "Handhabungsmittel" und "Handhabungseinrichtung" werden synonym verwendet.

Bei der motorisch ausgeführten Bewegung der Handhabungseinrichtungen handelt es sich um eine solche, die zu der von der Transportvorrichtung ausgeführten Grundtransportbewegung hinzutritt, die also in ihrer Richtung nicht der Transportrichtung der Transportvorrichtung entsprechen muss. Diese motorisch ausgeführte Bewegung der Handhabungseinrichtung erfolgt insbesondere relativ zur Transportvorrichtung.

Bevorzugt ist jede der Handhabungseinrichtungen separat motorisch bewegbar. Damit kann eine Bewegung der Handhabungseinrichtungen unabhängig voneinander erfolgen. Besonders bevorzugt weist jede der Handhabungseinrichtungen einen zugeordneten separaten Antrieb auf. Hierzu kann insbesondere wenigstens ein Motor vorgesehen sein. Bei dem Motor kann es sich beispielsweise um einen elektrischen, hydraulischen, pneumatischen oder ähnlichen Antriebsmotor handeln. Insbesondere kommen auch Servomotoren in Betracht.

Weiter bevorzugt weist jede der Handhabungseinrichtungen wenigstens einen Freiheitsgrad, vorzugsweise mehrere Freiheitsgrade auf. Dieses bedeutet, dass die Handhabungseinrichtung bevorzugt um wenigstens eine, insbesondere um mehrere Achsen und/oder entlang wenigstens einer Achse, bevorzugt entlang mehrerer Achsen bewegbar ist. Vorzugsweise ist dabei jeder Achse beziehungsweise jedem Freiheitsgrad ein Antrieb zugeordnet. Besonders bevorzugt handelt es sich dabei um wenigstens einen separaten und/oder motorischen Antrieb. Dies bedeutet, dass insbesondere jede Bewegungsrichtung beziehungsweise jeder Freiheitsgrad separat motorisch bewegbar und/oder motorisch verschwenkbar ist.

Vorzugsweise weist jede Handhabungseinrichtung zwei Freiheitsgrade auf, so dass eine freie Positionierbarkeit in zwei Dimensionen bzw. in einer Ebene realisierbar ist. Beispielsweise handelt es sich dabei um einen translatorischen Freiheitsgrad, insbesondere eine Translations- oder Teleskopierbewegung, und einen rotatorischen Freiheitsgrad, beispielsweise eine Rotations- oder Schwenkbewegung.

Als Motor oder Antrieb für einen translatorischen Freiheitsgrad eignen sich insbesondere elektromagnetische Linearmotoren. Ebenso haben sich elektromagnetische Torque-Motoren als besonderes vorteilhafte Antriebe für einen rotatorischen Freiheitsgrad erwiesen. Sowohl Linear- als auch Torque-Motoren zeichnen sich dabei vorteilhafterweise durch eine kompakte Bauweise und eine hohe Stellgenauigkeit bei gleichzeitig hoher Belastbarkeit und geringem Verschleiß aus.

Besonders bevorzugt ist jede der Handhabungseinrichtungen mittels einer Steuerungseinrichtung steuerbar. Vorzugsweise handelt es sich bei der Steuerungseinrichtung um eine elektronische Steuerung, insbesondere um eine Computersteuerung beziehungsweise Prozessrechnersteuerung. Weiter bevorzugt ist jede der Handhabungseinrichtungen mittels einer zugeordneten und/oder separaten und/oder zentralen Steuerungseinrichtung steuerbar. Dies bedeutet, dass eine zentrale oder dezentrale Steuerung alle oder zumindest wesentliche Steuerungsbefehle für die Handhabungseinrichtungen vorgibt. Es können durch die Steuerungseinrichtungen für die Steuerung wesentliche Informationen weitergegeben und/oder verarbeitet werden. Vorzugsweise kann auch eine verteilte beziehungsweise dezentrale Steuerung der Handhabungseinrichtungen vorgesehen sein.

Besonders vorteilhaft ist ein Steuerungssystem, bei dem jeder Motor oder zumindest jede Handhabungseinrichtung ein eigenes Steuergerät zum Positionieren des Motors bzw. der Handhabungseinrichtung aufgrund externer Stellsignale gewährleistet. Individuelle Anpassungen wie Nullpunktlage und Kalibrationen der einzelnen Motoren können dabei von dem jeweiligen Steuergerät berücksichtigt werden. Dadurch wird gewährleistet, dass sich vergleichbare Einheiten aus Motor bzw. Handhabungseinrichtung einerseits und Steuergerät andererseits stets gleich verhalten, wodurch ein schnelles und unkompliziertes Ersetzen im Schadensfall gewährleistet ist.

Die externen Stellsignale werden hingegen vorzugsweise von einer zentralen Steuerungseinrichtung bereitgestellt, wodurch sichergestellt werden kann, dass alle Handhabungseinrichtungen der erfindungsgemäßen Transportvorrichtung entsprechend den Vorgaben des Einzelfalls wie gewünscht wirken.

Insbesondere ist wenigstens ein Sensor und/oder wenigstens eine Sensoreinrichtung zur Ermittlung von Informationen über die Handhabungseinrichtung vorgesehen. Diese ermöglichen insbesondere eine Ermittlung wenigstens einer Position, einer Stellung und/oder eines Zustandes der Handhabungseinrichtung. Sensoren beziehungsweise Sensoranordnungen dienen dabei insbesondere der Ermittlung der aktuellen Position, von Endlagen, von Arbeits- und/oder Ruhepositionen beziehungsweise -stellungen und/oder relativen Anordnungen der Handhabungseinrichtungen zueinander. Hierzu können beispielsweise optische, akustische, elektrische, oder ähnliche Sensoren vorgesehen sein. Diese können vorzugsweise als kontaktbehaftete und/oder kontaktlose beziehungsweise berührungslose Sensoren ausgebildet sein. Die Sensoren können z.B. an den Handhabungseinrichtungen angeordnet sein, oder die Handhabungseinrichtungen bewegen sich an den Sensoren vorbei. Es ist auch möglich beides gemischt zu realisieren, und sowohl sich mitbewegende als auch stehende Sensoren zu verwenden.

Die Bewegung zumindest einiger, vorzugsweise aller Handhabungseinrichtungen relativ zueinander ist insbesondere synchronisiert. Vorzugsweise erfolgt die Synchronisation mittels wenigstens einer zentralen Steuerungseinrichtung, beispielsweise im Rahmen eines zuvor beschriebenen Steuerungssystems mit Steuergeräten. Alternativ oder ergänzend kann auch die Kommunikation mehrerer Steuerungseinrichtungen miteinander beziehungsweise mit Sensoren für eine Synchronisation der zugeordneten Handhabungseinrichtungen führen. Dazu werden die Steuerungseinrichtungen geeignet miteinander verbunden, um Informationen über den aktuellen Zustand beziehungsweise den zeitlichen Ablauf der Bewegung der Handhabungseinrichtungen auszutauschen.

Die Transportvorrichtung kann beispielsweise als Förderer, insbesondere als Endlosförderer oder als Übergaberad ausgebildet sein, z.B. mit Transportarmen. Die Transportvorrichtung weist wenigstens eine Handhabungseinrichtung auf, die insbesondere als Transportarm ausgebildet sein kann, insbesondere als Greifer oder als Transportdorn. Vorzugsweise ist die Handhabungseinrichtung gegenüber der Transportvorrichtung beweglich beziehungsweise verschwenkbar gelagert. Die Lagerung erfolgt vorzugsweise gemäß den oben beschriebenen Ausgestaltungen.

Die Handhabungseinrichtung ist insbesondere gegenüber der Transportvorrichtung beweglich angeordnet. Insbesondere ist die Handhabungseinrichtung motorisch verschwenkbar. Auf diese Weise kann die Handhabungseinrichtung zur Aufnahme und/oder Übergabe eines Behälters entsprechend zu einem korrespondierenden Gegenstück bewegt werden. Die Beweglichkeit beziehungsweise Verschwenkbarkeit stellt außerdem sicher, dass eine gewünschte Positionierung in einer Bearbeitungsstation ermöglicht wird.

Die Handhabungseinrichtung ist vorzugsweise zur Ausführung wenigstens einer Längsbewegung und/oder wenigstens einer Drehbewegung und/oder wenigstens einer Schwenkbewegung ausgebildet. Vorzugsweise ist zur Ausführung dieser Bewegungen wenigstens ein Motor vorgesehen. Eine Längsbewegung kann insbesondere durch einen Linearmotor realisiert werden. Eine Drehbewegung wird vorzugsweise mittels eines Torque-Motors angetrieben. Eine Schwenkbewegung wird insbesondere durch einen Servomotor ausgeführt. Neben diesen genannten Motorarten, die auch gegebenenfalls gegeneinander austauschbar sind, können auch andere geeignete Motortypen verwendet werden.

Die erfindungsgemäße Vorrichtung ermöglicht eine Bewegung beziehungsweise eine Verschwenkung relativ zu der Transportvorrichtung. Damit wird sichergestellt, dass eine Nachführung und Positionskorrektur der Behälter ermöglicht ist. Die Handhabungseinrichtung kann geeignet zur Positionierung bzw. zum Transport der Behälter im Rahmen der eigenen Beweglichkeit zusätzlich zur Bewegung der Transportvorrichtung bewegt werden. Damit sind Korrekturen der Positionierung ohne weiteres möglich.

Die Handhabungseinrichtung wird insbesondere motorisch gegenüber der Transportvorrichtung bewegt und/oder verschwenkt. Vorzugsweise ist die Handhabungseinrichtung um mehrere Achsen beziehungsweise entlang mehrerer Achsen verschwenkbar beziehungsweise belegbar. Damit kann eine genaue Positionierung und ein Ausgleich in mehreren Raumrichtungen bezüglich der Position erfolgen. Die Bewegung erfolgt vorzugsweise im laufenden Betrieb zum Ausgleich von Schwankungen im Betriebsablauf. Sie kann auch erfolgen, um Störzustände zu vermeiden, z.B. indem Handhabungseinrichtungen gezielt aus Kollisionsbereichen herausgeschwenkt werden.

Weiter bevorzugt wird die Position und/oder der Zustand der Handhabungseinrichtungen und/oder der Transportvorrichtungen mittels wenigstens eines Sensors und/oder mittels wenigstens einer Sensoranordnung erfasst. Eine entsprechende Positionsbeziehungsweise Zustandsbestimmung ist insbesondere erforderlich, um geeignet auf Abweichungen vom Sollzustand reagieren zu können. Gegebenenfalls wird durch geeignete Nachführung der Handhabungseinrichtungen mittels der motorischen Antriebe für ein Ausgleich der Abweichung der Ist-Position von der Soll-Position gesorgt.

Besonders bevorzugt wird die Bewegung der Handhabungseinrichtung und/oder der Transportvorrichtung durch wenigstens eine Steuerungseinrichtung gesteuert. Es handelt sich bei der Steuerungseinrichtung einerseits um zentrale Steuerungseinrichtungen, die für eine große Gruppe von oder sogar für alle Steuerungsaufgaben verwendet wird. Alternativ und/oder ergänzend können dezentrale Steuerungseinrichtungen vorgesehen sein. Diese sind typischerweise als separate Steuerungseinrichtungen jeder Handhabungseinrichtung oder Gruppen von Handhabungseinrichtungen zugeordnet. Damit wird eine gemeinsame Steuerung mehrerer Handhabungseinrichtungen ermöglicht. Mehrere Steuerungseinrichtungen müssen zur Kommunikation miteinander geeignet vernetzt beziehungsweise verbunden werden. Hierzu ist gegebenenfalls eine Programmierung des Datenaustausches vorzusehen.

Insbesondere wird die Steuerung der Bewegung der Handhabungseinrichtungen in Abhängigkeit vom Betriebszustand der Blasformungsmaschine beziehungsweise von Teilen derselben vorgenommen. Besonders bevorzugt hängt die Bewegung ab von der Position und/oder den Zustand wenigstens einer weiteren beziehungsweise anderen Handhabungseinrichtung und/oder Transportvorrichtung. Dabei wird beispielsweise verhindert, dass zwei Handhabungseinrichtungen beziehungsweise Transportvorrichtungen den gleichen Behälter für den Transport ergreifen wollen. Insbesondere kann damit eine Vorrangsteuerung realisiert werden. Es kann auch eine Kollisionsverhinderung realisiert werden.

Für erfindungsgemäße Transportvorrichtungen, die als rotierende oder rotierbare Übergaberäder mit wenigstens einer Handhabungseinrichtung, die in eine Ruheposition bewegbar ist, ausgebildet sind, ermöglicht die Erfindung zudem das Ausführen des folgenden, besonders sicheren Betriebsverfahrens, das auch eigenständigen erfinderischen Charakter aufweist.

Gemäß des erfindungsgemäßen Betriebsverfahrens für eine Maschine mit einer erfindungsgemäßen Transportvorrichtung ist vorgesehen, beim Anfahren der Maschine zunächst die Handhabungseinrichtung bzw. die Handhabungseinrichtungen, soweit vorhanden, in die jeweilige Ruheposition zu bewegen, bevor die als Übergaberad ausgebildete Transportvorrichtung bis zu einer Solldrehzahl beschleunigt wird. Dadurch wird wirksam vermieden, dass während des Anfahrens bzw. während der Beschleunigung undefinierte oder unsynchronisierte Zustände der Maschine und/oder der Transportvorrichtung zu einer Kollision der Handhabungseinrichtung bzw. der Handhabungseinrichtungen mit sonstigen Maschinenkomponenten führen können. So kann zunächst sichergestellt werden, dass die Transportvorrichtung synchron mit der Maschine, insbesondere mit etwaig vorhandenen weiteren rotierenden Rädern der Maschine, dreht, bevor die Handhabungseinrichtung oder die Handhabungseinrichtungen aus der jeweiligen Ruheposition bewegt werden, um bestimmungsgemäß eingesetzt und/oder verwendet zu werden.

Nachfolgend wird anhand von Zeichnungen ein bevorzugtes Ausführungsbeispiel der Erfindung näher beschrieben. Die Figuren zeigen:
- Fig. 1: eine erfindungsgemäße Transportvorrichtung, nämlich in einer Blasmaschine für thermoplastische Behälter, und
- Fig. 2: eine perspektivische Darstellung einer erfindungsgemäßen Übergabestation mit verschwenkbaren Handhabungseinrichtungen.

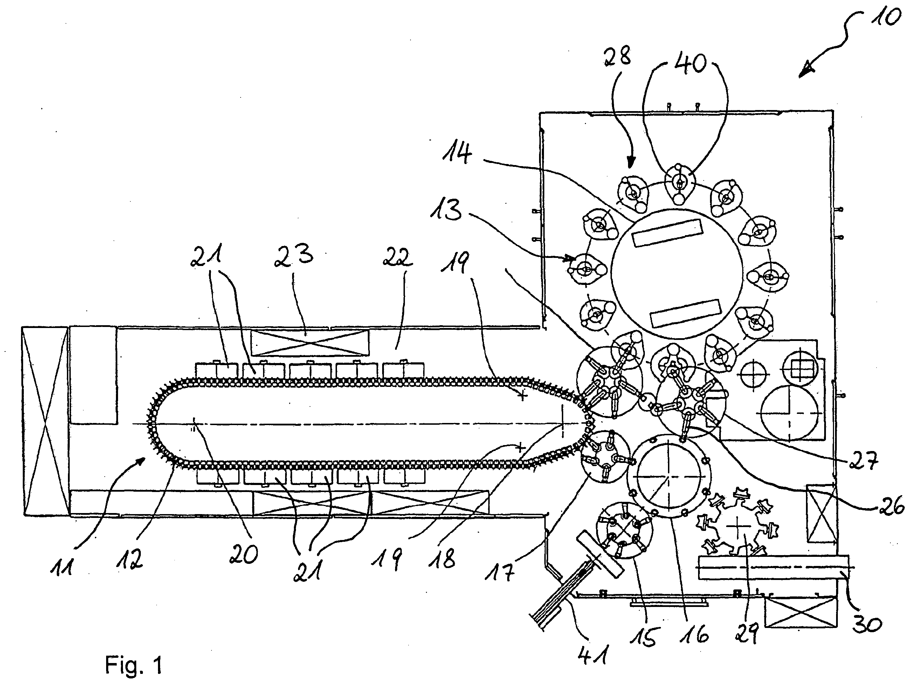

Die Fig. 1 zeigt eine Vorrichtung 10 zur Blasformung von Behältern, die hier nicht im Detail gezeigt sind. Die Blasformungsmaschine 10 weist unterschiedliche Bearbeitungstationen beziehungsweise Bearbeitungsmodule auf, die verschiedene Zwecke erfüllen. Der Temperaturkonditionierung der Vorformlinge dient ein langgestreckter Aufheizofen 11, der im linken, länglichen Bereich der Blasformungsmaschine 10 gezeigt ist und eine Heizstrecke bereitstellt. Der Aufheizofen 11 weist eine umlaufende Förderkette 12 auf, die eine Vielzahl von Vorformlingen aufnehmen und entlang von Heizeinrichtungen 21 transportieren kann.

Eine weitere Bearbeitungsstation innerhalb der Blasformungsmaschine 10 stellt das Blasrad 14 dar, das mehrere Blasstationen 13 trägt. Innerhalb der Blasstationen 13 erfolgt die Reckung und die Expansion der sogenannten Vorformlinge mittels Druckluft. Die Vorformlinge werden nach der thermischen Konditionierung im Aufheizofen 11 in die Blasstationen 13 gegeben und verlassen die Blasstation 13 als fertig geblasene Behälter.

Zur Übergabe von Vorformlingen bzw. von Behältern zwischen der Förderkette 12 des Aufheizofens 11 und dem Blasrad 14, sowie auch zur Übergabe von Vorformlingen und/oder daraus geblasenen Behältern zwischen verschiedenen Bearbeitungsstationen der Blasformungsmaschine 10 dienen so genannte Übergaberäder 15, 16, 17, 24, 27, 29. Diese nehmen Behälter an einer Eingabestelle auf und übergeben die Behälter an einer Ausgabestelle. Das Übergaberad 17 z.B. übernimmt vom Übergaberad 16 an einem Übergabepunkt die einlaufenden Vorformlinge und übergibt nach einer Drehung von etwa 180° die Vorformlinge an die Förderkette 12 im Bereich einer ersten Umlenkrolle 18 mit zwei zusätzlichen Stützrädern 19. Am gegenüberliegenden Ende der von der Förderkette 12 aufgespannten ovalen Bewegungsbahn ist eine weitere Umlenkungsrolle 20 angeordnet, um einen stabilen und zweckmäßigen Umlauf der Förderkette 12 sicherzustellen. Im Bereich des linearen Verlaufs der Förderkette 12 sind außerdem Heizeinrichtungen 21 vorgesehen. Diese dienen der Temperierung der daran vorbeigeführten Vorformlinge. Diese Heizeinrichtungen 21 sind in der Regel als Heizkästen ausgebildet, die zu mehreren und hintereinander angeordnet eine Heizstrecke 22 bilden. Im Bereich der Heizstrecke 22 kann außerdem noch ein Gebläse 23 vorgesehen sein, das im Wechselspiel mit den Heizeinrichtungen der richtigen Temperierung der Behälter dient.

Sobald die Behälter auf die gewünschte Temperatur gebracht worden sind und ggf. das gewünschte Temperaturprofil aufweisen, übernimmt ein Eingaberad 24 als Teil der Übergabestation 25 mit Hilfe von Tragarmen 26 die Behälter und führt sie dem Blasrad 14 zu.

Das Blasrad 14 weist Blasstationen 13 mit jeweils mehrteilig ausgebildeten Blasformen auf, die von Blasformträgern 28 gehalten werden. In jede Blasstation 13 wird ein Vorformling eingesetzt und mittels Druckluft zu fertigen Behältern expandiert. Die Blasformen umgeben die Vorformlinge und die Expansion erfolgt bis zur Anlage des sich aufweitenden Behälters an die Blasforminnenwand.

Mittels eines Ausgaberades 27 mit weiteren Tragarmen 26 werden die fertig geblasenen Behälter nunmehr dem Blasrad 14 entnommen und über das Übergaberad 16 und das Übergaberad 29 einer Ausgabestrecke 30 zugeführt.

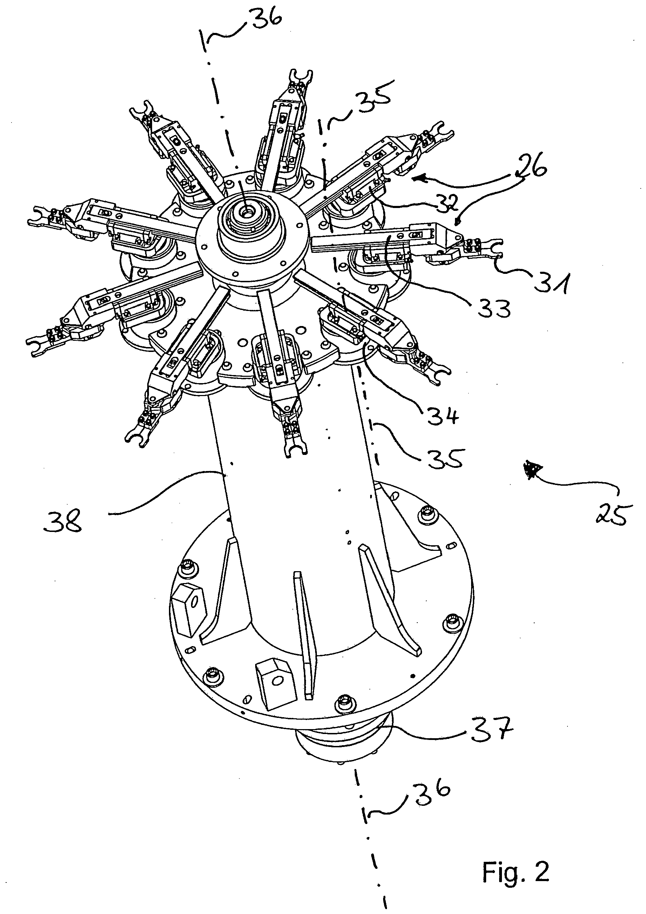

Wie in der Fig. 1 erkennbar ist, sind die Tragarme 26 des Eingaberades 24 wie auch die des Ausgaberades 27 gegenüber diesen verschwenkbar angeordnet. Hierzu wird auf Fig. 2 verwiesen, in der eine Übergabestation 25 im Detail dargestellt ist. Die übrigen Übergaberäder können in gleicher Weise ausgebildet sein.

Die Tragarme 26 des Übergaberades 25 weisen zangenartige Handhabungselemente in Form von Halteklammern 31 auf. Diese dienen zum Ergreifen jeweils eines Behälters, z.B. am Neckring eines Behälters.

Die Tragarme 26 selber sind einerseits mittels eines Linearmotors 32 im Wesentlichen radial zur Übergabestation 25 verschiebbar. Eine Verstellbarkeit der an den radial außen liegenden Tragarmenden angeordneten Halteklammern 31 in tangentialer Richtung wird durch einen Torque-Motor 34 und eine entsprechende Drehachse 35 ausgeführt, die parallel zur zentralen Drehachse 36 der Übergabestation 25 angeordnet ist. Zur Drehung der Übergabestation 25 insgesamt ist ein Servomotor 37 im Bereich der zentralen Drehachse 36 vorgesehen. Dieser Servomotor 37 befindet sich im Ausführungsbeispiel im Innern des Zylinders 38 als Gehäuse der Übergabestation 25. Die Tragarme 26 laufen mit der Übergabestation 25 um, so dass die Halteklammern 31 eine kreisförmige Grundbewegung ausführen.

Die Tragarme 26 der Übergabestation 25 lassen sich sowohl jeweils um ihre jeweilige Drehachse 35 als auch entlang ihres jeweiligen Lineartriebs 33 unabhängig voneinander verstellen. Zusätzlich zur Drehung der Übergabestation 25 um ihre Drehachse 36 können somit überlagerte Bewegungen ausgeführt werden, z.B. um kleine Asynchronitäten der Drehung der Übergabestation 25, des Blasrades 14 und der Förderkette 12 des Aufheizofens 11 auszugleichen.

Zur Ermittlung der aktuellen Position Transportarme und/oder ggf. der Behälter sind Sensoren erforderlich. Diese Sensoren sind weder in Figur 1 noch in Figur 2 im Detail dargestellt. Sie dienen dazu, z.B. die aktuelle Position eines Behälters zu erfassen und über eine ebenfalls nicht gezeigte Steuerungseinrichtung den gerade zugeordneten Tragarm an die entsprechende Position zu bewegen.

Im Gegensatz zu einer Lösung mittels einer reinen Kurvensteuerung mit eine externe Kurvenbahn entlanglaufenden Rollen kann bei der erfindungsgemäßen Lösung flexibel und jederzeit auf Abweichungen von der Sollposition reagiert werden. Notstopps und ähnliche Produktionsunterbrechungen werden dadurch seltener erforderlich. Im Übrigen können die einzelnen Übergabe- und Bearbeitungsschritte innerhalb der Blasformungsmaschine mit höherer Präzision durchgeführt werden, da jederzeit eine Nachregelung der Positionierung Z.B. der Tragarme 26 bzw. der daran angeordneten Halteklammern 31 möglich ist.

Gegebenenfalls können noch weitere Achsen zur motorischen Bewegbarkeit hinzugefügt werden. Insbesondere kann ein Teil der Übergaberäder durch geeignete Tragarme oder Roboterarme ersetzt werden. Hiermit wäre dann ein höherer Grad an Roboterintelligenz nötig, um die Behälter geeignet zwischen den einzelnen Bearbeitungsstationen der Blasformungsmaschine mittels Übergaberäder wie am Beispiel der Übergabestation 25 erläutert zu bewegen.

Die hier zeichnerisch nicht dargestellten Steuerungen können separat für jeden Tragarm 26 vorgesehen sein. Dieses bietet sich an, da die Steuerungsaufgaben jeweils identisch sind. Um eine größtmögliche Sicherheit bei der Interaktion der einzelnen Komponenten zu erreichen, wird eine Vernetzung beziehungsweise Kommunikation der einzelnen Steuerungseinrichtungen als vorteilhaft angesehen. Alternativ kann auch eine zentrale Steuerungseinrichtung vorgesehen sein, die sämtliche Parameter und Positionen auswertet und entsprechend steuert.

Die gezeigten und beschriebenen Merkmale, insbesondere die der motorisch bewegbaren Tragarme 26, sind auch auf andere vergleichbare Maschinen übertragbar. Das gezeigte Ausführungsbeispiel zeigt lediglich der Einfachheit halber einen konkreten Maschinentyp. Auch andere, mit Übergabestationen 25 arbeitende Maschinen lassen sich mit dieser Technik ausrüsten.

## Patentansprüche

1. Transportvorrichtung zum Transportieren und Handhaben von Behältern, insbesondere von Behältern aus einem thermoplastischen Material, wobei die Behälter von der Transportvorrichtung in einer Transportrichtung von einer Eingabestelle (41) zu einer Ausgabestelle (30) transportiert werden, wobei die Transportvorrichtung mehrere sich in Transportrichtung bewegende Handhabungseinrichtungen (26) zur insbesondere gleichzeitigen Handhabung eines oder mehrerer der Behälter aufweist, und wobei die Handhabungseinrichtungen (26) relativ zur Transportvorrichtung bewegbar angeordnet sind für eine Bewegung in einer von der Transportrichtung abweichenden Richtung, wobei die Transporteinrichtung wenigstens einen Motor (32, 34, 37) aufweist, mittels dem die Handhabungseinrichtungen (26) motorisch in der von der Transportrichtung abweichenden Richtung bewegbar ist, wobei die Handhabungseinrichtungen (26) gegenüber der Transportvorrichtung motorisch verschwenkbar ausgebildet sind, wobei die Transportvorrichtung als rotierendes Übergaberad (15, 16, 17, 29) und wobei die Handhabungseinrichtungen (26) zur Ausführung sowohl wenigstens einer Längsbewegung als auch wenigstens einer Dreh- und/oder Schwenkbewegung relativ zur Transportvorrichtung ausgebildet sind, **dadurch gekennzeichnet, dass** die Handhabungseinrichtungen (26) als Transportarme ausgeführt sind, die im wesentlichen radial zum Übergaberad verschiebbar sind, wobei an den radial außen liegenden Tragarmenden angeordnete Halteklammern in tangentialer Richtung verstellbar sind um eine Drehachse (35), wobei diese Drehachse (35) parallel zur zentralen Drehachse (36) des Übergaberades angeordnet ist.

2. Transportvorrichtung nach Anspruch 1 mit mehreren Handhabungseinrichtungen (26), **dadurch gekennzeichnet, dass** jede der Handhabungseinrichtungen (26) separat motorisch bewegbar mit dem Motor (32, 34, 37) verbunden ist, wobei die Handhabungseinrichtungen (26) vorzugsweise unabhängig voneinander bewegbar ausgeführt sind und/oder wobei die Transportvorrichtung für jede der mehreren Handhabungseinrichtungen einen separaten zugeordneten motorischen Antrieb aufweist, vorzugsweise einen separaten Motor.

3. Transportvorrichtung nach Anspruch 1 oder 2, **dadurch gekennzeichnet, dass** jede der Handhabungseinrichtungen (26) um wenigstens eine, bevorzugt mehrere Achsen und entlang wenigstens einer Achse, bevorzugt entlang mehrerer Achsen bewegbar ist, wobei vorzugsweise jeder Achse ein motorischer Antrieb zugeordnet ist, vorzugsweise jeweils ein eigener motorischer Antrieb.

4. Transportvorrichtung nach einem der vorhergehenden Ansprüche, **dadurch gekennzeichnet, dass** jede der Handhabungseinrichtungen (26) mittels einer Steuerungseinrichtung steuerbar ist, insbesondere mittels einer Computersteuerung, wobei vorzugsweise jede der Handhabungseinrichtungen (26) mittels einer zugeordneten separaten, insbesondere dezentralen, und/oder einer zentralen Steuerungseinrichtung steuerbar ist.

5. Transportvorrichtung nach einem der vorhergehenden Ansprüche, **dadurch gekennzeichnet, dass** wenigstens ein Sensor und/oder eine Sensoranordnung vorgesehen ist zur Ermittlung einer Position und/oder Stellung der Handhabungseinrichtung (26).

6. Transportvorrichtung nach einem der vorhergehenden Ansprüche, **dadurch gekennzeichnet, dass** die Bewegung zumindest einiger, vorzugsweise aller Handhabungseinrichtungen (26) relativ zueinander synchronisiert ist, vorzugsweise mittels wenigstens einer insbesondere zentralen Steuerungseinrichtung und/oder durch Kommunikation mehrerer Steuerungseinrichtungen miteinander und/oder mit Sensoren.

7. Transportvorrichtung nach einem der vorhergehenden Ansprüche, **dadurch gekennzeichnet, dass die,** die Handhabungseinrichtungen (26) als Greifer oder als Transportdorne ausgebildet sind.

8. Transportvorrichtung nach einem der vorhergehenden Ansprüche, **dadurch gekennzeichnet, dass** als Bewegungsantrieb für die Ausführung der Bewegung der Handhabungseinrichtungen (26) wenigstens ein Linearmotor (32) und/oder wenigstens ein Torque-Motor (34) und/oder wenigstens ein Servomotor (37) vorgesehen ist.

9. Transportvorrichtung nach einem der vorhergehenden Ansprüche, **dadurch gekennzeichnet, dass** zwischen der Eingabestelle (41) und der Ausgabestelle (30) eine Behandlungsstation (22, 21; 13, 14) für die Behälter angeordnet ist, insbesondere eine Heizvorrichtung (22, 21), und/oder eine Blasformungseinrichtung (13, 14), und/oder eine Fülleinrichtung, und/oder eine Sterilisiereinrichtung, und/oder eine Prüfeinrichtung, und/oder eine Reinigungseinrichtung, und/oder eine Verschließeinrichtung, und/oder eine Etikettiereinrichtung.

10. Verfahren zum Transportieren und Handhaben von Behältern in einer Behälterbehandlungsmaschine mit einer Transportvorrichtung, insbesondere von Behältern aus einem thermoplastischen Material und insbesondere in einer Blasmaschine, wobei die Behälter in einer Transportrichtung von der Transportvorrichtung von einer Eingabestelle (41) zu einer Ausgabestelle (30) transportiert werden, wobei mehrere Behälter hintereinander transportiert werden und wobei die Behälter zum Zwecke des Transports von einem oder von mehreren Handhabungsmitteln der Transportvorrichtung gehandhabt werden, wobei sich die Handhabungsmittel in Transportrichtung mit den davon gehandhabten Behältern bewegen, wobei während des Transports die Handhabungsmittel in einer von der Transportrichtung abweichenden Richtung relativ zu der Transportvorrichtung bewegt werden, **dadurch gekennzeichnet, dass** die Transportvorrichtung mit wenigstens einem Motor (32, 34, 37) für den Antrieb der Handhabungsmittel ausgestattet wird, wobei die Handhabungsmittel vom Motor antreibbar mit diesem verbunden werden, dass sie motorisch in der von der Transportrichtung abweichenden Richtung bewegbar ist, wobei die Handhabungseinrichtungen (26) gegenüber der Transportvorrichtung motorisch verschwenkt werden, wobei die Transportvorrichtung als rotierendes Übergaberad (15, 16, 17, 29) und wobei die Handhabungseinrichtungen (26) zur Ausführung sowohl wenigstens einer Längsbewegung als auch wenigstens einer Dreh- und/oder Schwenkbewegung relativ zur Transportvorrichtung ausgebildet sind, wobei die Handhabungseinrichtungen (26) als Transportarme ausgeführt sind, die im wesentlichen radial zum Übergaberad (15, 16, 17, 29) verschiebbar sind, wobei an den radial außen liegenden ,3Tragarmenden angeordnete Halteklammern in tangentialer Richtung verstellbar sind um eine Drehachse (35), wobei diese Drehachse (35) parallel zur zentralen Drehachse (36) des Übergaberades (15, 16, 17, 29) angeordnet ist.

11. Verfahren nach Anspruch 10, **dadurch gekennzeichnet, dass** jedes Handhabungsmittel (26) separat motorisch bewegbar mit dem Motor (32, 34, 37) verbunden wird, wobei die Handhabungsmittel (26) vorzugsweise unabhängig voneinander bewegbar ausgeführt werden und/oder wobei die Transportvorrichtung für jede der mehreren Handhabungsmittel (26) mit einem separaten und jeweils einem Handhabungsmittel (26) zugeordneten motorischen Antrieb ausgestattet wird, vorzugsweise mit einem separaten Motor, insbesondere mit einen Servomotor (37).

12. Verfahren nach Anspruch 10 oder 11, **dadurch gekennzeichnet, dass** jedes der Handhabungsmittel (26) um wenigstens eine, bevorzugt mehrere Achsen und/oder entlang wenigstens einer Achse, bevorzugt entlang mehrerer Achsen bewegbar ausgeführt wird, wobei vorzugsweise jeder Achse ein motorischer Antrieb zugeordnet wird, vorzugsweise jeweils ein eigener motorischer Antrieb.

13. Verfahren nach einem der vorhergehenden Ansprüche, **dadurch gekennzeichnet, dass** jedes der Handhabungsmittel (26) mittels einer Steuerungseinrichtung gesteuert wird, insbesondere mittels einer Computersteuerung, wobei vorzugsweise jedes der Handhabungsmittel (26) mittels einer zugeordneten separaten, insbesondere dezentralen, und/oder einer zentralen Steuerungseinrichtung gesteuert wird, insbesondere wobei von wenigstens einem Sensor und/oder einer Sensoranordnung eine Position und/oder Stellung der Handhabungsmittel (26) ermittelt und insbesondere an die Steuerungseinrichtung gegeben wird, insbesondere wobei die Bewegung zumindest einiger, vorzugsweise aller Handhabungsmittel (26) relativ zueinander synchronisiert erfolgt, vorzugsweise mittels wenigstens einer insbesondere zentralen Steuerungseinrichtung und/oder durch Kommunikation mehrerer Steuerungseinrichtungen miteinander und/oder mit Sensoren.

14. Verfahren nach einem der vorhergehenden Ansprüche, **dadurch gekennzeichnet, dass** die Handhabungsmittel (26) gegenüber der Transportvorrichtung motorisch verschwenkt werden, insbesondere wobei die Handhabungsmittel (26) eine Längsbewegung und/oder wenigstens eine Drehbewegung und/oder wenigstens einer Schwenkbewegung ausführen, wobei die Bewegung vorzugsweise von wenigstens ein Linearmotor (32) und/oder wenigstens einem Torque-Motor (34) und/oder wenigstens ein Servomotor (37) angetrieben wird.

## Claims

1. A transport device for transporting and handling containers, especially containers made of a thermoplastic material, wherein
the containers are transported by the transport device in a transport direction from an input point (41) to an output point (30), wherein the transport device has multiple handling devices (26), which are moving in the transport direction, for especially simultaneously handling one or more containers, and wherein the handling devices (26) are arranged so that they are movable relative to the transport direction for a movement in a direction differing from the transport direction, wherein the transport device has at least one motor (32, 34, 37) by means of which the handling devices (26) can be moved by a motor in the direction which differs from the transport direction, wherein the handling devices (26) are configured to be pivotable by a motor with respect to the transport direction, wherein the transport device is configured as a rotating transfer wheel (15, 16, 17, 29) and wherein the handling devices (26) are configured to perform at least one longitudinal movement as well as at least one rotational and/or one pivoting movement relative to the transport direction, **characterised in that**
- the handling devices (26) are adapted as transport arms, which are displaceable substantially radially to the transfer wheel, wherein retaining clips arranged at the radially outwardly positioned support arm ends can be adjusted in the tangential direction about a rotational axis (35), wherein this rotational axis (35) is arranged parallel to the central rotational axis (36) of the transfer wheel.

2. The transport device according to claim 1, comprising a plurality of handling devices (26), **characterised in that** each of the handling devices (26) is connected to the motor (32, 34, 37), so that it can be moved separately by the motor, wherein the handling devices (26) are preferably movable independently of one another and/or wherein the transport device has a separately assigned motor drive for each of the plurality of handling devices, preferably a separate motor.

3. The transport device according to claim 1 or 2, **characterised in that** each of the handling devices (26) is movable about at least one axis, preferably a plurality of axes, and along at least one axis, preferably along a plurality of axes, wherein preferably one motor drive is assigned to each axis, preferably in each case a dedicated motor drive.

4. The transport device according to one of the previous claims, **characterised in that** each of the handling devices (26) can be controlled by means of a control device, especially by means of a computer control, wherein preferably each of the handling devices (26) can be controlled by means of an assigned separate, especially decentralized, and/or a central control device.

5. The transport device according to one of the previous claims, **characterised in that** at least one sensor and/or one sensor array is provided for determining a position and/or a setting of the handling device (26).

6. The transport device according to one of the previous claims, **characterised in that** the movement of at least a few, preferably all of the handling devices (26) relative to one another is synchronized, preferably by means of at least one especially central control device and/or by communication of a plurality of control devices with one another and/or with sensors.

7. The transport device according to one of the previous claims, **characterised in that** the handling devices (26) are configured as grippers or as transport mandrels.

8. The transport device according to one of the previous claims, **characterised in that** at least one linear motor (32) and/or at least one torque motor (34) and/or at least one servo motor (37) is provided as the motion drive for the execution of the movement of the handling devices (26).

9. The transport device according to one of the previous claims, **characterised in that** a treatment station (22, 21; 13, 14) for the containers is arranged between the input point (41) and the output point (30), especially a heating device (22, 21), and/or a blow moulding device (13, 14), and/or a filling device, and/or a sterilization device, and/or a testing device, and/or a cleaning device, and/or a closing device, and/or a labelling device.

10. A method for transporting and handling containers in a container handling machine having a transport device, especially containers made of a thermoplastic material and especially in a blow moulding machine, wherein the containers are transported in a transport direction by the transport device from an input point (41) to an output point (30), wherein a plurality of containers are transported one after another and wherein the containers are handled by one or more handling means of the transport device for the purpose of the transport, wherein the handling means move in the direction of transport with the containers handled thereby, wherein during the transport the handling means are moved in a direction relative to the transport device which is different from the transport direction, **characterised in that** the transport device is equipped with at least one motor (32, 34, 37) for the drive of the handling means, wherein the handling means are connected to the motor, so that they can be driven by the motor, so that the handling means can be moved by the motor in the direction differing from the transport direction, wherein the handling devices (26) are pivoted by a motor with respect to the transport device, wherein the transport device is configured as a rotating transfer wheel (15, 16, 17, 29) and wherein the handling devices (26) are configured to execute at least one longitudinal movement as well as at least one rotational and/or pivoting movement relative to the transport device, wherein the handling devices (26) are adapted as transport arms, which are displaceable substantially radially to the transfer wheel (15, 16, 17, 29), wherein retaining clips arranged at the radially outwardly positioned support arm ends can be adjusted in the tangential direction about a rotational axis (35), wherein this rotational axis (35) is arranged parallel to the central rotational axis (36) of the transfer wheel (15, 16, 17, 29).

11. The method according to claim 10, **characterised in that** each of the handling means (26) is connected to the motor (32, 34, 37), so that it can be moved separately by the motor, wherein the handling means (26) are preferably movable independently of one another and/or wherein for each of the plurality of handling means (26) the transport device has a separate motor drive respectively assigned to a handling means (26), preferably a separate motor, especially a servo motor (37).

12. The method according to claim 10 or 11, **characterised in that** each of the handling means (26) is adapted for movement about at least one axis, preferably a plurality of axes and/or along at least one axis, preferably along a plurality of axes, wherein preferably one motor drive is assigned to each axis, preferably in each case a dedicated motor drive.

13. The method according to one of the previous claims, **characterised in that** each of the handling means (26) is controlled by means of a control device, especially by means of a computer control, wherein preferably each of the handling means (26) is controlled by means of an assigned separate, especially decentralized, and/or a central control device, wherein especially at least one sensor and/or one sensor array determines a position and/or a setting of the handling means (26) and especially transmits it to the control device, wherein especially the movement of at least a few, preferably all of the handling means (26) relative to one another is synchronized, preferably by means of at least one especially central control device and/or by communication of a plurality of control devices with one another and/or with sensors.

14. The method according to one of the previous claims, **characterised in that** the handling means (26) are pivoted by a motor with respect to the transport device, wherein especially the handling means (26) execute one longitudinal movement and/or at least one rotational movement and/or at least one pivoting movement, wherein the movement is preferably driven by at least one linear motor (32) and/or at least one torque motor (34) and/or at least one servo motor (37).

## Revendications

1. Dispositif de transport pour transporter et manipuler des récipients, notamment des récipients en un matériau thermoplastique, les récipients étant transportés par le dispositif de transport dans un sens de transport d'un point d'introduction (41) vers un point de sortie (30), le dispositif de transport présentant plusieurs dispositifs de manipulation (26) se déplaçant dans le sens de transport, notamment pour la manipulation simultanée d'un ou plusieurs des récipients et les dispositifs de manipulation (26) étant agencés de façon à être mobiles par rapport au dispositif de transport pour un mouvement selon une direction différente du sens de transport, le dispositif de transport présentant au moins un moteur (32, 34, 37) au moyen duquel les dispositifs de manipulation (26) peuvent être déplacés selon la direction différente du sens de transport, les dispositifs de manipulation (26) étant conçus de façon à pouvoir, sous l'action du moteur, pivoter par rapport au dispositif de transport, le dispositif de transport étant conçu sous forme de roue de transfert (15, 16, 17, 29) rotative et les dispositifs de manipulation (26) étant conçus pour exécuter aussi bien au moins un mouvement longitudinal qu'au moins un mouvement de rotation et/ou de pivotement par rapport au dispositif de transport, **caractérisé en ce que** les dispositifs de manipulation (26) sont réalisés sous forme de bras de transport déplaçables dans un sens essentiellement radial par rapport à la roue de transfert, des pièces de maintien agencées aux niveau des extrémités radiales extérieures des bras de transport étant ajustables tangentiellement autour d'un axe de rotation (35), cet axe de rotation (35) étant parallèle à l'axe de rotation central (36) de la roue de transfert.

2. Dispositif de transport selon la revendication 1 avec plusieurs dispositifs de manipulation (26), **caractérisé en ce que** chacun des dispositifs de manipulation (26) est relié au moteur (32, 34, 37) de façon à pouvoir être entraîné séparément par celui-ci, les dispositifs de manipulation (26) étant de préférence réalisés de façon à pouvoir fonctionner indépendamment les uns des autres et/ou le dispositif de transport présentant pour chacun des dispositifs de manipulation un entraînement motorisé particulier, de préférence un moteur séparé.

3. Dispositif de transport selon la revendication 1 ou 2, **caractérisé en ce que** chacun des dispositifs de manipulation (26) est mobile autour d'au moins un et de préférence autour de plusieurs axes et le long d'au moins un et de préférence le long de plusieurs axes, un entraînement motorisé et de préférence un entraînement particulier étant de préférence affecté à chaque axe.

4. Dispositif de transport selon l'une des revendications précédentes, **caractérisé en ce que** chacun des dispositifs de manipulation (26) peut être contrôlé au moyen d'un dispositif de commande, notamment au moyen d'une commande informatique, chacun des dispositifs de manipulation (26) pouvant de préférence être contrôlé par un dispositif de commande particulier qui lui est affecté, notamment par un dispositif de commande décentralisé et/ou centralisé.

5. Dispositif de transport selon l'une des revendications précédentes, **caractérisé en ce qu'**au moins un détecteur et/ou un agencement de détecteurs est prévu pour détecter un positionnement et/ou une position du dispositif de manipulation (26).

6. Dispositif de transport selon l'une des revendications précédentes, **caractérisé en ce que** le mouvement relatif de certains et de préférence de tous les dispositifs de manipulation (26) les uns par rapport aux autres est synchronisé, de préférence au moyen d'au moins un dispositif de commande, notamment central, et/ou par communication de plusieurs dispositifs de commande entre eux, et/ou au moyen de détecteurs.

7. Dispositif de transport selon l'une des revendications précédentes, **caractérisé en ce que** les dispositifs de manipulation (26) sont réalisés sous forme de griffes ou de mandrin de transport.

8. Dispositif de transport selon l'une des revendications précédentes, **caractérisé en ce qu'**au moins un moteur linéaire (32) et/ou au moins un moteur torque (34) et/ou au moins un servomoteur (37) est prévu en guise d'entraînement pour l'exécution des mouvements des dispositifs de manipulation (26).

9. Dispositif de transport selon l'une des revendications précédentes, **caractérisé en ce qu'**une station de traitement (22, 21; 13, 14) des récipients est agencée entre le point d'introduction (41) et le point de sortie (30), notamment un dispositif de chauffage (22, 21) et/ou un dispositif de moulage par soufflage (13, 14) et/ou un dispositif de remplissage et/ou un dispositif de stérilisation et/ou un dispositif de contrôle et/ou un dispositif de nettoyage et/ou un dispositif d'obturation et/ou un dispositif d'étiquetage.

10. Procédé de transport et de manipulation de récipients dans une machine de traitement de récipients avec un dispositif de transport, notamment de récipients en un matériau thermoplastique et notamment dans une machine de moulage par soufflage, les récipients étant transportés par le dispositif de transport dans un sens de transport d'un point d'introduction (41) vers un point de sortie (30), plusieurs récipients étant transportés l'un derrière l'autre et les récipients étant, en vue de leur transport, manipulés par un ou plusieurs moyens de manipulation du dispositif de transport, les moyens de manipulation se déplaçant dans le sens de transport avec les récipients qu'ils manipulent, les moyens de manipulation étant, pendant le transport, déplacés relativement au sens de transport selon une direction différente du sens de transport, **caractérisé en ce que** le dispositif de transport est équipé d'au moins un moteur (32, 34, 37) pour l'entraînement des moyens de manipulation, les moyens de manipulation étant reliés au moteur de façon à pouvoir être entraînés par celui-ci et déplacés selon une direction différente du sens de transport, les dispositifs de manipulation (26) étant pivotés par le moteur par rapport au dispositif de transport, le dispositif de transport étant conçu sous forme de roue de transfert (15, 16, 17, 29) rotative et les dispositifs de manipulation (26) étant conçus pour exécuter aussi bien au moins un mouvement longitudinal qu'au moins un mouvement de rotation et/ou de pivotement par rapport au dispositif de transport, les dispositifs de manipulation (26) étant réalisés sous forme de bras de transport déplaçables dans un sens essentiellement radial par rapport à la roue de transfert (15, 16, 17, 29), des pièces de maintien agencées aux niveau des extrémités radiales extérieures des bras de transport étant ajustables tangentiellement autour d'un axe de rotation (35), cet axe de rotation (35) étant parallèle à l'axe de rotation central (36) de la roue de transfert (15, 16, 17, 29).

11. Procédé selon la revendication 10, **caractérisé en ce que** chaque moyen de manipulation (26) est relié au moteur (32, 34, 37) de façon à pouvoir être entraîné séparément par celui-ci, les moyens de manipulation (26) étant de préférence réalisés de façon à pouvoir fonctionner indépendamment les uns des autres et/ou le dispositif de transport étant équipé, pour chacun des moyens de manipulation (26), d'un entraînement motorisé séparé affecté au moyen de manipulation (26) respectif, cet entraînement étant de préférence un moteur séparé, notamment un servomoteur (37).

12. Procédé selon la revendication 10 ou 11, **caractérisé en ce que** chacun des moyens de manipulation (26) est réalisé de façon à être mobile autour d'au moins un et de préférence autour de plusieurs axes et/ou le long d'au moins un et de préférence le long de plusieurs axes, un entraînement motorisé et de préférence un entraînement particulier étant de préférence affecté à chaque axe.

13. Procédé selon l'une des revendications précédentes, **caractérisé en ce que** chacun des moyens de manipulation (26) est contrôlé au moyen d'un dispositif de commande, notamment au moyen d'une commande informatique, chacun des moyens de manipulation (26) étant de préférence contrôlé par un dispositif de commande particulier qui lui est affecté, notamment par un dispositif de commande décentralisé et/ou centralisé, un positionnement et/ou une position du dispositif de manipulation (26) étant notamment détecté par au moins un détecteur et/ou un agencement de détecteurs et transmis notamment au dispositif de commande, le mouvement relatif de certains et de préférence de tous les moyens de manipulation (26) les uns par rapport aux autres étant notamment synchronisé, de préférence au moyen d'au moins un dispositif de commande, notamment central, et/ou par communication de plusieurs dispositifs de commande entre eux, et/ou au moyen de détecteurs.

14. Procédé selon l'une des revendications précédentes, **caractérisé en ce que** les moyens de manipulation (26) sont pivotés par un moteur par rapport au dispositif de transport, les moyens de manipulation (26) exécutant notamment un mouvement longitudinal et/ou au moins un mouvement de rotation et/ou au moins un mouvement de pivotement, le mouvement étant de préférence exécuté sous l'action d'au moins un moteur linéaire (32) et/ou d'au moins un moteur torque (34) et/ou d'au moins un servomoteur (37).
